# EUROPÄISCHE PATENTSCHRIFT

(11) **EP 2 966 452 B1**
(45) Veröffentlichungstag und Bekanntmachung des Hinweises auf die Patenterteilung: **13.12.2017**
(21) Anmeldenummer: 15002054.3
(22) Anmeldetag: 09.07.2015
(51) Int. Cl.: G01P 5/14, G01P 5/165

(54) **DRUCKANSCHLUSS FÜR EIN LUFTFAHRZEUG**
PRESSURE PORT FOR AN AIRCRAFT
PRISE DE PRESSION POUR AERONEF

(30) Priorität: 11.07.2014 DE 102014010293
(43) Veröffentlichungstag der Anmeldung: 13.01.2016
(73) Patentinhaber: Airbus Defence and Space GmbH, 81663 Ottobrunn (DE)
(72) Erfinder: Heuer, Thomas, 85391 Allershausen (DE); Altmann, Horst, 80805 München (DE)
(74) Vertreter: LKGLOBAL Lorenz & Kopf PartG mbB Patentanwälte

(56) Entgegenhaltungen:
- EP-A1- 0 462 227
- WO-A1-2013/028220
- WO-A1-2015/095183

## Beschreibung

### TECHNISCHES GEBIET

Die Erfindung betrifft einen Druckanschluss für ein Luftfahrzeug, insbesondere einen statischen Druckanschluss für ein Luftfahrzeug, ein Luftfahrzeug mit einem solchen Druckanschluss und ein Verfahren zur Montage eines Druckanschlusses für ein Luftfahrzeug. Das Luftfahrzeug kann ein Flugzeug, ein Hubschrauber, ein UAV (Unmanned Aerial Vehicle, unbemanntes Luftfahrzeug), eine Drohne oder ähnliches sein.

### HINTERGRUND DER ERFINDUNG

Statische Druckanschlüsse, dazugehörige Druckgeber und Rohrleitungen müssen gegen das Eindringen und Ansammeln von Wasser und Feuchtigkeit geschützt werden, um u.a. einen störungsfreien Betrieb eines Air Data Systems, d.h. einer Datenquelle für Flugregelung und Flugführung zu gewährleisten. Die Druckanschlüsse sind meist im Bereich einer Außenhaut eines Flugzeugrumpfes angeordnet. Üblicherweise werden die Druckanschlüsse mit Wasserabscheidern bzw. water traps kombiniert, die in den Rohrleitungen angeordnet sind, um das Wasser abzuscheiden bzw. zu sammeln. Diese Wasserabscheider sind jedoch aufwändig in der Integration in das Flugzeug, in der Inspektion, im Betrieb, in der Wartung und in der Reparatur. Zusätzlich benötigen die Wasserabscheider für die Inspektion, den Betrieb, die Wartung und die Reparatur entsprechende Wartungsklappen oder -türen, die jedoch Tarnkappen- bzw. Stealtheigenschaften des Flugzeugs deutlich reduzieren. Weiterhin hängt ihre Funktionsfähigkeit von der Schwerkraft ab, was bedeutet, dass sie nur bei Normalflug einwandfrei arbeiten. Ein Flug in Rückenlage und insbesondere ein anhaltender Flug in Rückenlage stellt ein Problem dar.

Die WO 2013/028220 beschreibt einen Druckanschluss, der zur Verwendung in einem unbemannten Luftfahrzeug ausgestaltet ist. Dieser weist ein Pitotrohr sowie einen Druckanschluss für die Messung des statischen Drucks auf, welche ein poröses, hydrophobes Gewebe enthalten, das verhindert, dass Wasser und Schmutz den Drucksensor erreichen Weiterhin ist aus der WO 90/10492 ein Druckanschluss mit einer Wasserabscheidevorrichtung bekannt.

### ZUSAMMENFASSUNG DER ERFINDUNG

Es ist eine Aufgabe der Erfindung einen Druckanschluss für ein Luftfahrzeug vorzuschlagen, welcher besonders leicht zu handhaben ist. Diese Aufgabe wird durch einen Druckanschluss für ein Luftfahrzeug, ein Luftfahrzeug mit einem solchen Druckanschluss und durch ein Verfahren zur Montage eines Druckanschlusses für ein Luftfahrzeug gemäß den Merkmalen der unabhängigen Ansprüche gelöst. Vorteilhafte Ausführungsformen und Weiterbildungen sind den Unteransprüchen und der nachfolgenden Beschreibung zu entnehmen.

Es wird vorgeschlagen, einen Druckanschluss (engl. sensing orifice) und insbesondere einen statischen Druckanschluss für ein Luftfahrzeug bereitzustellen. Das Luftfahrzeug kann ein Flugzeug, ein Hubschrauber, ein UAV, eine Drohne oder ähnliches sein. Im Folgenden wird von einem Flugzeug ausgegangen. Der Druckanschluss umfasst einen Durchlass durch eine Außenhaut eines Flugzeugs und einen Feuchtigkeitsschutzkörper. Der Durchlass ist zur Verbindung mit einer Druckleitung im Inneren des Flugzeugs gestaltet und kann ein durch die Außenhaut gebohrtes Loch sein. Die Druckleitung kann von beliebiger Form und Länge sein und z.B. zu einem oder mehreren Instrumenten, Druckgebern oder Drucktransducern führen.

Der Feuchtigkeitsschutzkörper ist gasdurchlässig und wasserundurchlässig, und der Feuchtigkeitsschutzkörper ist so angeordnet, dass der Durchlass gasdurchlässig und wasserundurchlässig verschlossen ist.

Als wasserundurchlässig kann ein Material angesehen werden, wenn es einen Durchtritt flüssigen Wassers unter einem Druck von wenigstens 1,5 bar (1500 mm Wassersäule) verhindert. Als gasdurchlässig kann ein Material angesehen werden, wenn es einen Volumenstrom von mindestens 0,005 cm³/s über den gesamten Querschnitt des Durchlasses bei einer Druckdifferenz von 1 mbar und einem Außendruck von ca. 1 bar zulässt. Bei höheren Genauigkeitsforderungen an die Druckmessung, größeren Innenvolumina eines möglicherweise angeschlossenen Druckgebers, höheren Steig- und Sinkgeschwindigkeiten des Flugzeugs und/oder ähnlichen Randbedingungen können die Anforderungen um ein bis zwei Größenordnungen steigen. Als wasserundurchlässig kann z.B. auch ein Material angesehen werden, wenn es einen Durchtritt flüssigen Wassers unter einem Druck zwischen 0,5 bar und 15 bar und bevorzugt zwischen 0,1 bar und 150 bar verhindert. Als gasdurchlässig kann z.B. auch ein Material angesehen werden, wenn es einen Volumenstrom von mindestens 0,0001 cm³/s oder mindestens 0,01 cm³/s über den gesamten Querschnitt des Durchlasses bei einer Druckdifferenz von 1 mbar und einem Außendruck von ca. 1 bar zulässt.

Beispielhaft und in anderen Worten, der statische Druckanschluss der Erfindung ist gegen ein Eindringen von Wasser und Feuchtigkeit geschützt, ohne einen Luftstrom durch den Druckanschluss zu behindern. Ein Druckausgleich bleibt also möglich.

Gemäß der Erfindung wird der Aufwand bezüglich Inspektion, Betrieb, Wartung und Reparatur des Druckanschlusses im Gegensatz zum Einsatz herkömmlicher Wasserabscheider bzw. water traps deutlich verringert. Im Gegensatz zu herkömmlichen Wasserabscheidern ist die Funktionsfähigkeit des statischen Druckanschlusses nicht von der Schwerkraft abhängig, sodass selbst ein anhaltender Rückenflug des Flugzeugs kein Problem darstellt. Der statische Druckanschluss und sein umgebender Bereich auf der Außenhaut des Flugzeugs können an die Oberflächeneigenschaften der Außenhaut angepasst werden, sodass durch den statischen Druckanschluss keine Störung einer Druckmessung durch einen Drucksensor und keine Störung einer Luftströmung entlang des Flugzeugs auftritt. Weiterhin wird der Einsatz von Serviceklappen oder -türen vermieden, die eine Tarnkappen- oder Stealtheigenschaft des Flugzeugs negativ beeinflussen. Auch ein Eindringen von Fremdsubstanzen, wie Staub und Insekten, in die Druckleitung im Inneren des Flugzeugs wird verhindert. Insgesamt wird die Handhabbarkeit des Druckanschlusses verbessert.

Der Feuchtigkeitsschutzkörper kann porös oder mikroporös sein. Unter porös kann jedes Material verstanden werden, das durchgängige Poren oder eine Porenstruktur in für einen Gasaustausch relevanter Größe aufweist. Diese Poren sind bevorzugt gerade groß genug, um einen Gasaustausch zu gewährleisten, aber einen Durchtritt flüssigen Wassers zu verhindern. Der Gasaustausch ist notwendig, um einen Druckausgleich zwischen dem wechselnden Außendruck und dem Druck innerhalb des Druckanschlusses, der Druckleitung und/oder eines Druckgebers oder Drucktransducers zu gewährleisten. Dies kann bei einer Porengröße größer ca. 0,1 µm gegeben sein. In einer Ausführungsform liegt die Porengröße des porösen Feuchtigkeitsschutzkörpers zwischen ca. 0,05 µm und 0,75 µm, bevorzugt zwischen ca. 0,1 µm und 0,5 µm und weiter bevorzugt zwischen ca. 0,2 µm und 0,4 µm. Die Anforderungen an die Eigenschaften des Feuchtigkeitsschutzkörpers hängen unter anderem vom Querschnitt des Durchlasses, dem Totraumvolumen, der maximal zu erwartenden vertikalen Geschwindigkeit und dem maximal zulässigen Fehler der Druckmessung ab. Erfindungsgemäß umfasst der Feuchtigkeitsschutzkörper eine Membran. Die Membran kann ein Gewebe umfassen. Die Membran kann ein Laminat sein. Die Membran kann ein Verbund aus mehreren Schichten sein, wie z.B. einer Membranschicht, einer Trägerschicht und/oder einer Schutzschicht sein. Die Membranschicht kann aus mechanisch expandiertem Polytetrafluorethylen (PTFE, Handelsname Teflon), Polyetherester oder ähnlichem sein. Die Schutzschicht dient zum Schützen der Membran gegen äußere Einflüsse wie z.B. mechanische Schädigungen oder Verunreinigungen. Die Schutzschicht kann z.B. aus Polyamid- oder Polyester-Gewebe gefertigt sein. Die Trägerschicht und die Schutzschicht können in eine Schicht integriert sein.

Die Membran ist dabei so auf der Außenhaut des Flugzeugs angeordnet, dass ein Bedeckungsbereich über und um den Durchlass gasdurchlässig und wasserundurchlässig verschlossen ist. Der Bedeckungsbereich über und um den Durchlass ist bevorzugt so dimensioniert, dass der Rand der Membran ausreichend weit vom Durchlass entfernt ist, um eine Störung einer Druckmessung zu vermeiden.

Die Membran kann auf die Außenhaut des Flugzeugs geklebt sein. Auch mechanische Befestigungen der Membran, wie etwa ein Einspannen in einen Spannrahmen, ein Festschrauben mit einer Abdeckplatte oder ähnliches ist möglich. Die Membran ist über dem Durchlass vorteilhafterweise nicht mit Klebstoffen, Lacken oder sonstigen Zusatzstoffen versehen, um die Funktionsfähigkeit der Membran nicht zu stören.

In einer Ausführungsform ist ein Rand der Membran zum Übergang in die Außenhaut abgeschrägt. Es kann auch ein Dichtmittel, wie z.B. Silikon, auf den Rand der Membran beim Übergang in die Außenhaut aufgebracht sein, sodass der Übergang in die Außenhaut abgeschrägt ist. Die Abschrägung verringert Störungen der Druckmessung.

In einer Ausführungsform umfasst der Druckanschluss weiterhin eine Druckleitung und eine Heizvorrichtung. Die Druckleitung kann mit dem Durchlass verbunden sein. Die Druckleitung kann durch die Heizvorrichtung beheizbar sein. Der Druckanschluss kann weiterhin einen Druckgeber oder Drucktransducer umfassen, der mit der Druckleitung verbunden und durch die Heizvorrichtung beheizbar ist. Die Heizvorrichtung kann ein unerwünschtes Abkühlen oder Einfrieren der Vorrichtungen verhindern. Die Heizvorrichtung kann weiterhin dazu beitragen, Feuchtigkeit durch beschleunigte Diffusion zu entfernen. Der Durchlass, die Flugzeugaußenhaut und/oder der Feuchtigkeitsschutzkörper sind bevorzugt nicht beheizbar, um eine Beschädigung dieser Komponenten zu vermeiden.

Es wird vorgeschlagen, ein Luftfahrzeug mit einem solchen Druckanschluss bereitzustellen. Das Luftfahrzeug kann ein Flugzeug, ein Hubschrauber, ein UAV, eine Drohne oder ähnliches sein.

Es wird weiterhin vorgeschlagen, ein Verfahren zur Montage eines Druckanschlusses für ein Luftfahrzeug bereitzustellen. Das Verfahren zur Montage eines insbesondere statischen Druckanschluss für ein Luftfahrzeug umfasst die folgenden Schritte, nicht notwendigerweise in dieser Reihenfolge:
a) Bereitstellen eines Durchlasses durch eine Außenhaut eines Luftfahrzeugs zur Verbindung mit einer Druckleitung im Inneren des Luftfahrzeugs,
b) Bereitstellen eines gasdurchlässigen und wasserundurchlässigen Feuchtigkeitsschutzkörpers, und
c) gasdurchlässiges und wasserundurchlässiges Verschließen des Durchlasses durch den Feuchtigkeitsschutzkörper.

Der Feuchtigkeitsschutzkörper kann porös oder mikroporös sein. Der Feuchtigkeitsschutzkörper umfasst eine Membran, die so auf der Außenhaut des Flugzeugs angeordnet ist, dass ein Bedeckungsbereich über und um den Durchlass gasdurchlässig und wasserundurchlässig verschlossen und abgedeckt ist.

In einer Ausführungsform umfasst der Druckanschluss weiterhin eine Druckleitung, einen Druckgeber und/oder eine Heizvorrichtung. Das Verfahren zur Montage eines Druckanschlusses für ein Luftfahrzeug kann dann weiterhin einen Schritt d) umfassen, nämlich ein Verbinden des Durchlasses mit der Druckleitung, dem Druckgeber und/oder der Heizvorrichtung.

Abschlussarbeiten an der Außenhaut werden bevorzugt nach dem Montieren des Feuchtigkeitsschutzkörpers vorgenommen, um Beschädigungen des Feuchtigkeitsschutzkörpers und die Entstehung von störenden Kanten und Stufen zu vermeiden.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen gleiche Bezugszeichen für gleiche oder ähnliche Objekte.
- Fig. 1: zeigt eine Querschnittsansicht einer Außenhaut eines Luftfahrzeugs und eines statischen Druckanschlusses gemäß einer Ausführungsform der vorliegenden Erfindung.
- Fig. 2: zeigt eine Draufsicht auf die Außenhaut des Luftfahrzeugs und den statischen Druckanschluss gemäß einer Ausführungsform der vorliegenden Erfindung.
- Fig. 3: zeigt ein Flugzeug mit einem Druckanschluss gemäß einer Ausführungsform der vorliegenden Erfindung.
- Fig. 4: zeigt eine schematische Darstellung eines Verfahrens zur Montage eines Druckanschlusses an einem Flugzeug gemäß einer Ausführungsform der vorliegenden Erfindung.

### DETAILLIERTE BESCHREIBUNG EXEMPLARISCHER

### AUSFÜHRUNGSFORMEN

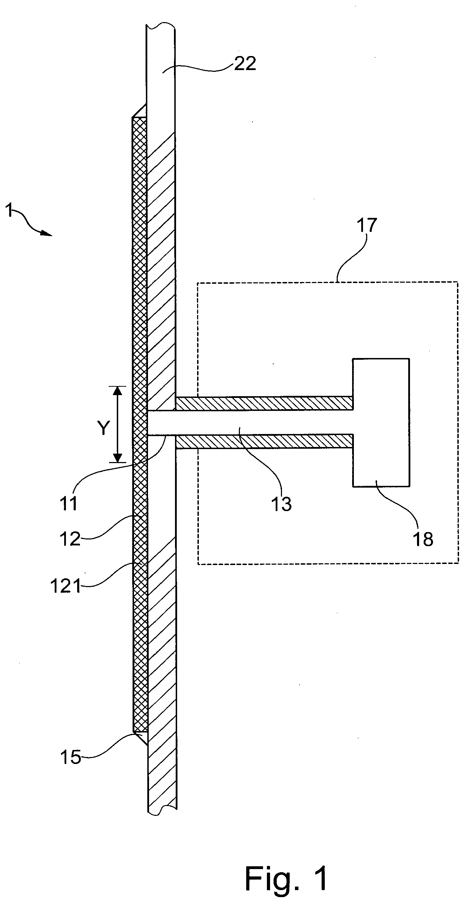

**Fig. 1** zeigt einen Querschnitt durch eine Außenhaut 22 eines Luftfahrzeugs 100 und einen statischen Druckanschluss 1, der in die Außenhaut 22 integriert ist. Das Luftfahrzeug 100 kann ein Flugzeug, ein Hubschrauber, ein UAV, eine Drohne oder ähnliches sein. Im Folgenden wird von einem Flugzeug ausgegangen. Der Druckanschluss 1 umfasst einen Durchlass 11 durch die Außenhaut 22 des Flugzeugs und einen Feuchtigkeitsschutzkörper 12.

Der Durchlass 11 ist ein durch die Außenhaut 22 gebohrtes Loch und mit einer Druckleitung 13 im Inneren des Flugzeugs verbunden. Die Druckleitung 13 ist von beliebiger Form und Länge und hier mit einem Druckgeber 18 oder Drucktransducer verbunden.

Der Feuchtigkeitsschutzkörper 12 ist porös, gasdurchlässig und wasserundurchlässig. Als poröses Material kann jedes Material verwendet werden, das durchgängige Poren oder eine Porenstruktur in für einen Gasaustausch relevanter Größe aufweist. Diese Poren sind bevorzugt gerade groß genug, um einen Gasaustausch zu gewährleisten, aber einen Durchtritt flüssigen Wassers zu verhindern. Der Gasaustausch ist notwendig, um einen Druckausgleich zwischen dem wechselnden Außendruck und dem Druck innerhalb des Druckanschlusses 1, der Druckleitung 13 und des Druckgebers 18 oder Drucktransducers zu gewährleisten.

Der Feuchtigkeitsschutzkörper 12 ist so angeordnet, dass der Durchlass 11 gasdurchlässig und wasserundurchlässig verschlossen ist, indem der Feuchtigkeitsschutzkörper 12 den Durchlass 11 abdeckt. Der statische Druckanschluss 1 ist demnach gegen ein Eindringen von Wasser und Feuchtigkeit geschützt, ohne dass ein Luftstrom durch den Druckanschluss 1 behindert wird. Ein Druckausgleich bleibt also möglich.

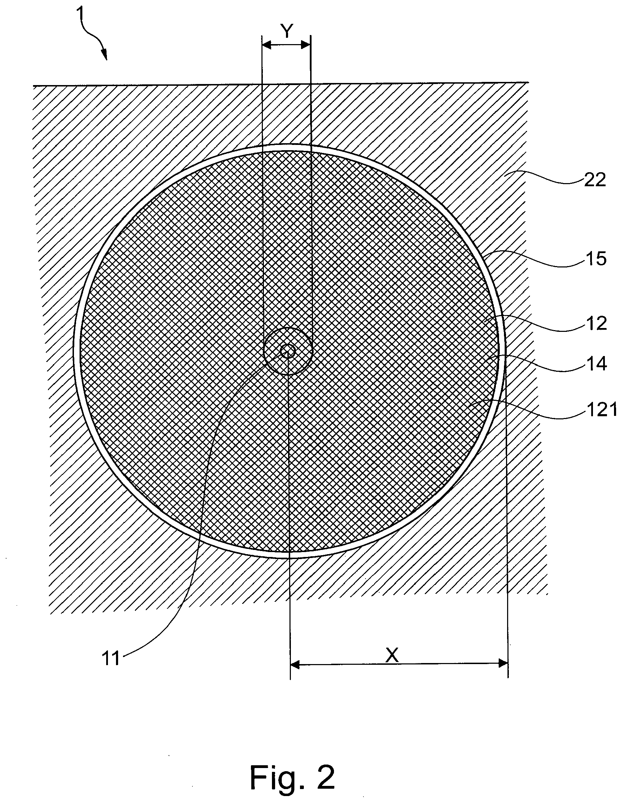

Der Feuchtigkeitsschutzkörper 12 umfasst eine Membran 121. In der in den Fig. 1 und 2 gezeigten Ausführungsform ist die Membran 121 ein Verbund aus einer Träger- und -schutzschicht und einer Membranschicht. Die Träger- und - schutzschicht dient zur mechanischen Unterstützung und zum Schutz der Membranschicht vor äußeren Einflüssen wie z.B. mechanische Schädigungen oder Verunreinigungen. **Fig. 2** zeigt eine Draufsicht auf die Außenhaut 22 des Luftfahrzeugs 100 und des statischen Druckanschlusses 1, der in die Außenhaut 22 integriert ist. Die Membran 121 ist in der Draufsicht kreisrund, kann aber auch andere Formen aufweisen. Die Membran 121 ist so auf der Außenhaut 22 des Flugzeugs angeordnet, dass ein Bedeckungsbereich 14 über und um den Durchlass 11 gasdurchlässig und wasserundurchlässig verschlossen ist. Der Bedeckungsbereich 14 über und um den Durchlass 11 ist so dimensioniert, dass der Rand der Membran 121 ausreichend weit vom Durchlass 11 entfernt ist, hier um einen Betrag x, um eine Störung einer Druckmessung zu vermeiden.

Die Membran 121 ist auf die Außenhaut 22 des Flugzeugs geklebt. Die Membran 121 ist über dem Durchlass 11 in einem Bereich y vorteilhafterweise nicht mit Klebstoffen, Lacken oder sonstigen Zusatzstoffen versehen, um die Funktionsfähigkeit der Membran 121 nicht zu stören.

Es ist ein Dichtmittel 15 auf den Rand der Membran 121 beim Übergang in die Außenhaut 22 aufgebracht, sodass der Übergang in die Außenhaut 22 abgeschrägt ist. Die Abschrägung verringert Störungen der Druckmessung und des Luftflusses.

In der in Fig. 1 gezeigten Ausführungsform umfasst der Druckanschluss 1 weiterhin die Druckleitung 13 und eine Heizvorrichtung 17. Die Druckleitung 13 ist mit dem Durchlass 11 verbunden und durch die Heizvorrichtung 17 beheizbar. Die Druckleitung 13 kann durch eine Ummantelung isoliert sein. Der Druckanschluss 1 umfasst weiterhin den Druckgeber 18 oder Drucktransducer, der mit der

Druckleitung 13 verbunden und ebenfalls durch die Heizvorrichtung 17 beheizbar ist. Die Heizvorrichtung 17 kann ein unerwünschtes Abkühlen oder Einfrieren der Vorrichtungen verhindern. Die Heizvorrichtung 17 kann weiterhin dazu beitragen, Feuchtigkeit durch beschleunigte Diffusion zu entfernen. Der Durchlass 11, die Flugzeugaußenhaut und/oder der Feuchtigkeitsschutzkörper 12 sind bevorzugt nicht beheizbar, um eine Beschädigung dieser Komponenten zu vermeiden und/oder die StealthEigenschaften des Flugzeugs nicht zu verschlechtern.

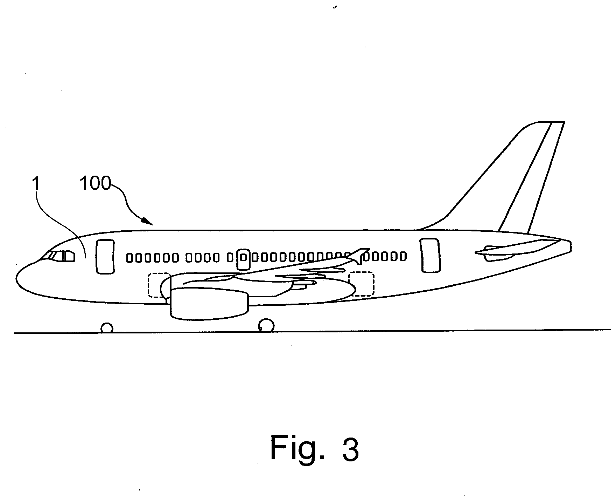

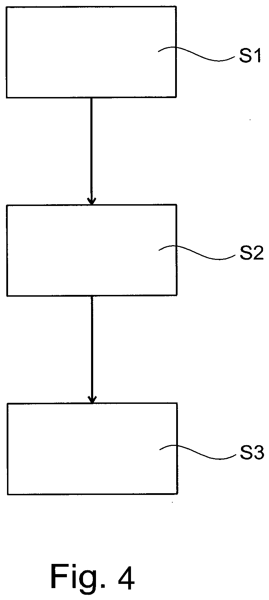

**Fig. 3****.** zeigt ein Luftfahrzeug 100, und zwar ein Flugzeug, mit einem Druckanschluss 1 gemäß der Erfindung und **Fig. 4** eine schematische Darstellung eines Verfahrens zur Montage eines Druckanschlusses 1 an einem Flugzeug. Das Verfahren zur Montage eines statischen Druckanschluss 1 an einem Flugzeug umfasst die folgenden Schritte, nicht notwendigerweise in dieser Reihenfolge:
Schritt S1, Bereitstellen eines Durchlasses 11 durch eine Außenhaut 22 eines Luftfahrzeugs 100 zur Verbindung mit einer Druckleitung 13 im Inneren des Luftfahrzeugs 100,
Schritt S2, Bereitstellen eines gasdurchlässigen und wasserundurchlässigen Feuchtigkeitsschutzkörpers 12, und
Schritt S3, gasdurchlässiges und wasserundurchlässiges Verschließen des Durchlasses 11 durch den Feuchtigkeitsschutzkörper 12. Der Feuchtigkeitsschutzkörper 12 umfasst die Membran 121. Der Schritt S3 umfasst ein Anordnen der Membran 121 auf der Außenhaut 22 des Flugzeugs 100, sodass ein Bedeckungsbereich 14 über und um den Durchlass 1 gasdurchlässig und wasserundurchlässig verschlossen und abgedeckt ist.

In einer Ausführungsform umfasst der Druckanschluss 1 weiterhin eine Druckleitung 13, einen Druckgeber 18 und/oder eine Heizvorrichtung 17. Das Verfahren zur Montage eines Druckanschlusses 1 für ein Luftfahrzeug 100 kann dann weiterhin einen Schritt S4 umfassen, nämlich ein Verbinden des Durchlasses 1 mit der Druckleitung 13, dem Druckgeber 18 und/oder der Heizvorrichtung 17. Abschlussarbeiten an der Außenhaut 22 werden bevorzugt nach dem Montieren des Feuchtigkeitsschutzkörpers 12 vorgenommen, um Beschädigungen des Feuchtigkeitsschutzkörpers 12 und die Entstehung von störenden Kanten und Stufen zu vermeiden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Luftfahrzeug (100), umfassend
- einen Durchlass (11) durch eine Außenhaut (22) des Luftfahrzeugs (100), und
- einen Druckanschluss (1), umfassend einen Feuchtigkeitsschutzkörper (12),
wobei der Durchlass (11) zur Verbindung mit einer Druckleitung (13) im Inneren des Luftfahrzeugs (100) gestaltet ist,
wobei der Feuchtigkeitsschutzkörper (12) gasdurchlässig und wasserundurchlässig ist,
wobei der Feuchtigkeitsschutzkörper (12) so angeordnet ist, dass der Durchlass (11) gasdurchlässig und wasserundurchlässig verschlossen ist, und wobei der Feuchtigkeitsschutzkörper (12) eine Membran (121) umfasst, die so auf der Außenhaut (22) des Luftfahrzeugs (100) angeordnet ist, dass ein Bedeckungsbereich (14) über und um den Durchlass (11) gasdurchlässig und wasserundurchlässig verschlossen ist.

2. Luftfahrzeug (100) nach Anspruch 1, wobei der Feuchtigkeitsschutzkörper (12) porös ist.

3. Luftfahrzeug (100) nach einem der vorhergehenden Ansprüche, wobei ein Dichtmittel (15) auf den Rand der Membran (121) beim Übergang in die Außenhaut (22) so aufgebracht ist, dass der Übergang in die Außenhaut (22) abgeschrägt ist.

4. Luftfahrzeug (100) nach einem der vorhergehenden Ansprüche, wobei der Feuchtigkeitsschutzkörper (12) weiterhin eine Schutzschicht zum Schützen der Membran (121) gegen äußere Einflüsse umfasst.

5. Luftfahrzeug (100) nach einem der vorhergehenden Ansprüche, wobei der Druckanschluss (1) weiterhin eine Druckleitung (13) und eine Heizvorrichtung (17) umfasst, wobei der Durchlass (11) mit der Druckleitung (13) verbunden ist, und die Druckleitung (13) durch die Heizvorrichtung (17) beheizbar ist.

6. Ein Verfahren zur Montage eines Druckanschluss (1) für ein Luftfahrzeug (100), umfassend die folgenden Schritte:
- Bereitstellen eines Durchlasses (11) durch eine Außenhaut (22) eines Luftfahrzeugs (100) zur Verbindung mit einer Druckleitung (13) im Inneren des Luftfahrzeugs (100),
- Bereitstellen eines gasdurchlässigen und wasserundurchlässigen Feuchtigkeitsschutzkörpers (12), und
- gasdurchlässiges und wasserundurchlässiges Verschließen des Durchlasses (11) durch den Feuchtigkeitsschutzkörper (12),
wobei der Feuchtigkeitsschutzkörper (12) eine Membran (121) umfasst, die so auf der Außenhaut (22) des Luftfahrzeugs (100) angeordnet ist, dass ein Bedeckungsbereich (14) über und um den Durchlass (11) gasdurchlässig und wasserundurchlässig verschlossen ist.

## Claims

1. An aircraft (100), comprising
- a passage (11) through an outer skin (22) of the aircraft (100, and
- a sensing orifice (1), comprising a moisture protection body (12),
wherein the passage (11) is configured to connect with a pressure line (13) in an interior of the aircraft (100),
wherein the moisture protection body (12) is gas-permeable and water-impermeable, wherein the moisture protection body (12) is disposed so that the passage (11) is gas-permeably and water-impermeably sealed, and
wherein the moisture protection body (12) comprises a membrane (121) which is disposed on the outer skin (22) of the aircraft (100) such that a coverage area (14) over and around the passage (11) is gas-permeably and water-impermeably sealed.

2. The aircraft (100) according to claim 1, wherein the moisture protection body (12) is porous.

3. The aircraft (100) according to any of the preceding claims, wherein a sealant (15) is applied to an edge of the membrane (121) at the transition to the outer skin (22) such that the transition to the outer skin (22) is tapered.

4. The aircraft (100) according to any of the preceding claims, wherein the moisture protection body (12) further comprises a protective layer for protecting the membrane (121) against external influences.

5. The aircraft (100) according to any of the preceding claims, wherein the sensing orifice (1) further comprises a pressure line (13) and a heating device (17), wherein the passage (11) is connected with the pressure line (13), and the pressure line (13) is heatable by the heating device (17).

6. A method for assembling a sensing orifice (1) for an aircraft (100), comprising the following steps:
- providing a passage (11) through an outer skin (22) of an aircraft (100) for connecting to a pressure line (13) in an interior of the aircraft (100),
- providing a gas-permeable and water-impermeable moisture protection body (12), and
- gas-permeable and water-impermeable sealing of the passage (11) by use of the moisture protection body (12),
wherein the moisture protection body (12) comprises a membrane (121) which is disposed on the outer skin (22) of the aircraft (100) such that a coverage area (14) over and around the passage (11) is gas-permeably and water-impermeably sealed.

## Revendications

1. Aéronef (100), comprenant :
- un passage (11) à travers un revêtement extérieur (22) de l'aéronef (100), et
- un raccord de refoulement (1), comprenant un corps résistant à l'humidité (12), dans lequel le passage (11) est conçu pour être relié à une conduite de refoulement (13) à l'intérieur de l'aéronef (100),
dans lequel le corps résistant à l'humidité (12) est perméable aux gaz et imperméable à l'eau,
dans lequel le corps résistant à l'humidité (12) est agencé de telle sorte que le passage (11) est obturé de manière perméable aux gaz et imperméable à l'eau, et
dans lequel le corps résistant à l'humidité (12) comprend une membrane (121) qui est agencée sur le revêtement extérieur (22) de l'aéronef (100) de telle sorte qu'une zone de recouvrement (14) est obturée de manière perméable aux gaz et imperméable à l'eau au-dessus et autour du passage (11).

2. Aéronef (100) selon la revendication 1, dans lequel le corps résistant à l'humidité (12) est poreux.

3. Aéronef (100) selon une quelconque des revendications précédentes, dans lequel un moyen d'étanchéité (15) est appliqué sur le bord de la membrane (121) à la jonction dans le revêtement extérieur (22) de telle sorte que la jonction dans le revêtement extérieur (22) est chanfreinée.

4. Aéronef (100) selon une quelconque des revendications précédentes, dans lequel le corps résistant à l'humidité (12) comprend en outre une couche de protection pour protéger la membrane (121) contre les influences extérieures.

5. Aéronef (100) selon une quelconque des revendications précédentes, dans lequel le raccord de refoulement (1) comprend en outre une conduite de refoulement (13) et un dispositif de chauffage (17), le passage (11) étant relié à la conduite de refoulement (13), et la conduite de refoulement (13) pouvant être chauffée par l'intermédiaire du dispositif de chauffage (17).

6. Procédé de montage d'un raccord de refoulement (1) pour un aéronef (100), comprenant les étapes suivantes :
- fournir un passage (11) à travers un revêtement extérieur (22) d'un aéronef (100) pour le relier à une conduite de refoulement (13) à l'intérieur de l'aéronef (100),
- fournir un corps résistant à l'humidité (12) perméable aux gaz et imperméable à l'eau, et et
- obturer le passage (11) de manière à être perméable aux gazes et imperméable à l'eau par l'intermédiaire du corps résistant à l'humidité (12),
dans lequel le corps résistant à l'humidité (12) comprend une membrane (121) qui est agencée sur le revêtement extérieur (22) de l'aéronef (100) de telle sorte qu'une zone de recouvrement (14) est obturée de manière perméable aux gaz et imperméable à l'eau au-dessus et autour du passage (11).
